# EUROPEAN PATENT APPLICATION

(11) **EP 4 814 677 A1**
(43) Date of publication of application: **30.09.2026**
(21) Application number: 24918952.3
(22) Date of filing: 08.11.2024
(51) Int. Cl.: G06F 3/0484, G06F 16/9535, G06F 16/9032, G06F 16/9038, G06F 16/955, G06F 16/332, G06F 16/338, G06F 40/205, G06F 40/30, G06F 40/279

(54) **ELECTRONIC DEVICE FOR GENERATING RECOMMENDED RESPONSES, OPERATING METHOD THEREOF, AND RECORDING MEDIUM**

(30) Priority: 17.01.2024 KR 20240007382; 04.03.2024 KR 20240030770
(71) Applicant: Samsung Electronics Co., Ltd., Suwon-si, Gyeonggi-do 16677 (KR)
(72) Inventor: SON, Dongil, Suwon-si Gyeonggi-do 16677 (KR); KIM, Hyeongseok, Suwon-si Gyeonggi-do 16677 (KR); PARK, Sungkweon, Suwon-si Gyeonggi-do 16677 (KR); PARK, Soonsang, Suwon-si Gyeonggi-do 16677 (KR); YEO, Jaeyung, Suwon-si Gyeonggi-do 16677 (KR); JEON, Yongjoon, Suwon-si Gyeonggi-do 16677 (KR)
(74) Representative: Gulde & Partner
(86) International application number: PCT/KR2024/017661
(87) International publication number: WO 2025/154918

(57) **Abstract**

Disclosed are an electronic device for generating recommended responses and an operating method thereof. The electronic device may comprise at least one processor including a processing circuit. The electronic device may comprise a memory including one or more storage media storing instructions. The instructions, when executed individually or collectively by at least one processor, may enable the electronic device to: parse conversations of a plurality of participants who participated in a communication application; divide the parsed conversations of the plurality of participants into an entire conversation and individual conversations for respective participants and analyze same; generate recommended responses respectively for the plurality of participants on the basis of the analyzed entire conversation and individual conversations; and combine participant information related to the recommended responses with the recommended responses and display same on a display.

## Description

### TECHNICAL FIELD

The following embodiments relate to an electronic device for generating recommended responses, an operating method thereof, and a recording medium.

### BACKGROUND ART

An electronic device provides a chat function with other participants using a chat application. Recently, users frequently use a group chat function for chatting with multiple participants in addition to one-to-one chat with another participant.

The above information may be presented as the related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

According to an embodiment, an electronic device may include at least one processor including processing circuitry. The electronic device may include a memory including one or more storage media storing instructions. The instructions, when individually or collectively executed by the at least one processor, may cause the electronic device to parse a chat of a plurality of participants joining a communication application (app), classify and analyze the parsed chat of the plurality of participants into an entire chat and a participant-wise individual chat, generate a recommended response for each of the participants, based on the analyzed entire chat and the analyzed individual chat, and combine the recommenCded response with participant information related to the recommended response and display the combined recommended response on a display.

According to an embodiment, an operating method of an electronic device may parse a chat of a plurality of participants joining a communication app. The operating method of the electronic device may classify and analyze the parsed chat of the plurality of participants into an entire chat and a participant-wise individual chat. The operating method of the electronic device may generate a recommended response for each of the participants, based on the analyzed entire chat and the analyzed individual chat. The operating method of the electronic device may combine the recommended response with participant information related to the recommended response and display the combined recommended response on a display.

According to an embodiment, instructions stored in a computer-readable storage medium may, when executed by one or more processors, cause the electronic device to perform the operations of the operating method of the electronic device.

### BRIEF DESCRIPTION OF DRAWINGS

With regard to the description of the drawings, the same or similar reference numerals may be used to refer to the same or similar elements.
FIG. 1 is a block diagram illustrating an electronic device in a network environment according to various embodiments.
FIG. 2 is a diagram illustrating an overall configuration of an electronic device for generating a recommended response according to an embodiment.
FIG. 3 is a diagram illustrating a method of providing a recommended response to each of participants by analyzing individual chats of the participants joining a group chat according to an embodiment.
FIG. 4 is a diagram illustrating a method of providing a recommended response to each of participants using context of entire chat of the participants joining a group chat according to an embodiment.
FIG. 5 is a diagram illustrating a method of displaying a recommended response on a chat window of a group chat according to an embodiment.
FIG. 6 is a diagram illustrating a method of displaying a recommended response generated based on a specific link on a chat window of a group chat according to an embodiment.
FIG. 7 is a diagram illustrating a method of displaying a recommended response for a specific chat selected by a user on a chat window of a group chat according to an embodiment.
FIG. 8 is a diagram illustrating a method of displaying a recommended response generated based on attached content on a chat window of a group chat according to an embodiment.
FIG. 9 is a diagram illustrating a method of displaying a recommended response that is changed as a chat of other participants is added, on a chat window of a group chat according to an embodiment.
FIG. 10 is a diagram illustrating a method of generating a recommended response when video content is attached according to an embodiment.
FIG. 11 is a diagram illustrating a method of generating a recommended response based on a request for a user according to an embodiment.
FIGS. 12A and 12B are diagrams illustrating a method of generating a recommended response in a notification pop-up state of a communication application (app) according to an embodiment.
FIG. 13 is a diagram illustrating a method of generating a recommended response based on a relationship among participants joining a group chat according to an embodiment.
FIG. 14 is a diagram illustrating a method of generating a recommended response when an original message is deleted from a chat of participants joining a group chat according to an embodiment.
FIG. 15 is a diagram illustrating a method of generating a recommended response based on state information of a user according to an embodiment.
FIG. 16 is a diagram illustrating a method of generating a recommended response based on a degree of reaction of another participant to a message of a user according to an embodiment.
FIG. 17 is a diagram illustrating a method of generating a recommended response by an electronic device according to an embodiment.

### BEST MODE FOR CARRYING OUT THE INVENTION

Hereinafter, embodiments are described in detail with reference to the accompanying drawings. However, the present disclosure may be implemented in many different forms and is not limited to the embodiments described herein. When describing the embodiments with reference to the accompanying drawings, like reference numerals refer to like elements and a repeated description related thereto is omitted.

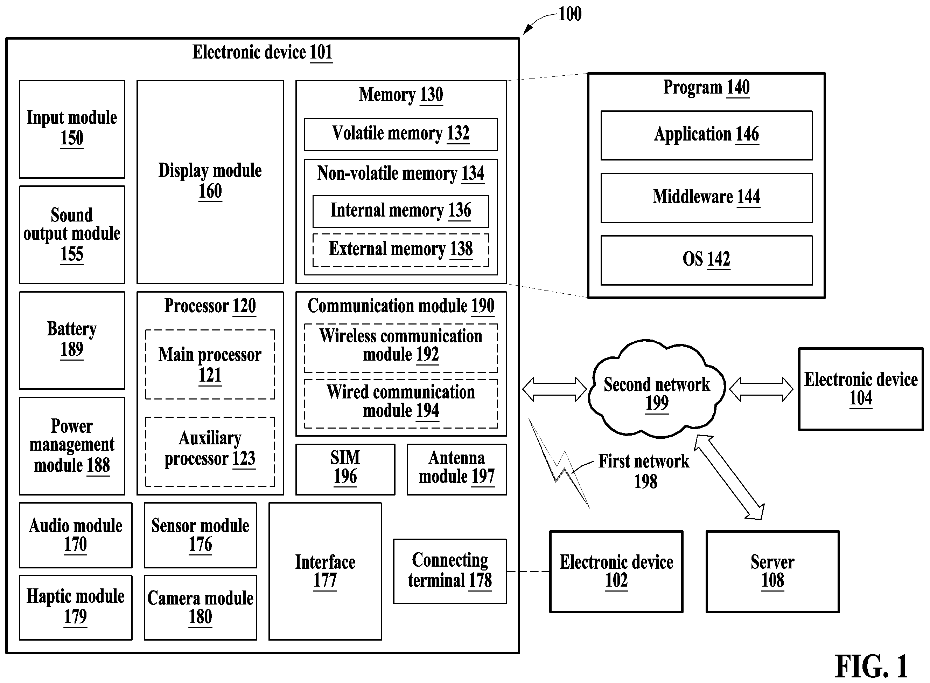

FIG . 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. The processor 120 may be implemented as a system on chip (SoC) configured to perform processing or an integrated circuit (IC). The processor 120 may include at least one processor and the operations of the electronic device 101 described herein may be performed by one processor or a combination of multiple processors. When the operations of the electronic device 101 are performed by the combination of the multiple processors, any one processor included in the combination of the multiple processors may perform some of the operations of the electronic device 101. For example, the processor 120 may correspond to a plurality of processors for dividing and collectively performing a plurality of operations among the processors.

According to an embodiment, the processor 120 may be implemented as circuitry (e.g., processing circuitry), such as system on chip (SoC) or an integrated circuit (IC). The processor 120 may include one or more processors. For example, the processor 120 may include a combination of one or more processors, such as a CPU, a GPU, a microprocessor unit (MPU), an AP, and a CP.

According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The memory 130 may store at least one of instructions executable by the processor 120. The memory 130 may include at least one memory and the instructions to control the processor 120 to control the operations of the electronic device 101 described herein may be stored in one memory or may be divided and stored in multiple memories.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch. The display module 160 may be implemented with, for example, a foldable structure and/or a rollable structure. For example, a size of a display screen of the display module 160 may be reduced when folded and expanded when unfolded.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the components described above may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

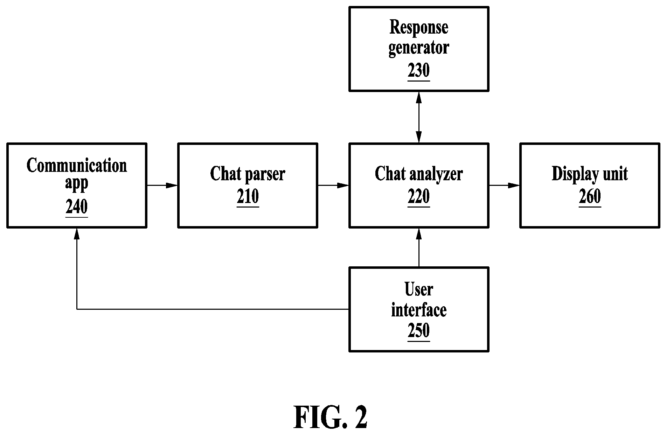

FIG. 2 is a diagram illustrating an overall configuration of an electronic device for generating a recommended response according to an embodiment.

Referring to FIG. 2, at least one processor (e.g., the processor 120 of FIG. 1) included in an electronic device (e.g., the electronic device 101 of FIG. 1) may control operations of a chat parser 210, a chat analyzer 220, and a response generator 230 to provide a recommended response in a group chat situation in which three or more people have a conversation.

Firstly, the at least one processor may parse a chat in a group chat of a communication application (app) 240 via the chat parser 210. In this case, parsing may refer to segmenting a chat, in other words, a message, in a group chat of the communication app 240 into a semantic unit. For example, the communication app 240 may include a short message service (SMS) that is an additional service of a mobile phone, or a chat app, such as Kakaotalk or Telegram; however, the type of communication app is only an example and is not limited thereto.

The at least one processor may analyze the chat parsed by the chat parser 210 using the chat analyzer 220. In this case, the chat analyzer 220 may analyze the chat by classifying the chat of participants joining a group chat into an entire chat and a participant-wise individual chat.

The at least one processor may generate a recommended response for each of the participants via the response generator 230, based on the chat of the participants analyzed by the chat analyzer 220. For example, in a chat room of a group chat, when participant A and participant C are partners, and participant B is a speaker, if participant B provides an input via a user interface 250, the at least one processor may generate recommended responses for participants A and C via the response generator 230, respectively, and may provide the recommended responses on a display unit 260 (e.g., the display module 160 of FIG. 1). In this case, when the respective recommended responses generated by the response generator 230 are displayed on the display unit 260, the at least one processor may provide each recommended response combined with a character or an image indicating the partner such that a partner to which the recommended response displayed on the display unit 260 is directed is distinguished.

According to an embodiment, the electronic device 101 may include at least one processor 120 including processing circuitry. The electronic device 101 may include memory 130 including one or more storage media storing instructions. When the instructions are executed individually or collectively by the at least one processor 120, the instructions may cause the electronic device 101 to parse a chat of a plurality of participants joining a communication app, analyze the parsed chat of the plurality of participants by classifying the chat into an entire chat and a participant-wise individual chat, generate recommended responses for the plurality of participants based on the analyzed entire chat and individual chat, respectively, and combine participant information related to the recommended response with the recommended response and display the recommended response on a display.

According to an embodiment, the instructions, when executed individually or collectively by the at least one processor 120, may cause the electronic device 101 to, when uniform resource locator (URL) information is received from another participant via the communication app, analyze a web page or content corresponding to the URL information, and generate a recommended response corresponding to the URL information, based on a result of analyzing the web page or content corresponding to the URL information, a result of analyzing the entire chat, and a result of analyzing an individual chat of the participant who provides the URL information.

According to an embodiment, the instructions, when executed individually or collectively by the at least one processor 120, may cause the electronic device 101 to, when content corresponding to an image or a video is received from another participant via the communication app, analyze the content and generate a recommended response corresponding to the content, based on a result of analyzing the content, a result of analyzing the entire chat, and a result of analyzing an individual chat of the participant who provides the content.

According to an embodiment, the instructions, when executed individually or collectively by the at least one processor 120, may cause the electronic device 101 to generate a recommended response for content based on a result of analyzing the content.

According to an embodiment, the instructions, when executed individually or collectively by the at least one processor 120, may cause the electronic device 101 to analyze an association between content and a user based on a result of analyzing the content, and when the analyzed association is greater than or equal to a preset reference, generate information related to the user as a recommended response.

According to an embodiment, the instructions, when executed individually or collectively by the at least one processor 120, may cause the electronic device 101 to, when a specific chat is selected from a chat of a plurality of participants, generate a recommended response corresponding to the selected specific chat, based on a result of analyzing the selected specific chat and a result of analyzing an entire chat.

According to an embodiment, the instructions, when executed individually or collectively by the at least one processor 120, may cause the electronic device 101 to identify a response request chat requesting a response from a user, based on the analyzed entire chat and individual chat, search for specific information related to the response request chat using a search function of the electronic device, and generate a search result for the specific information found via the search function as a recommended response corresponding to the response request chat.

According to an embodiment, the instructions, when executed individually or collectively by the at least one processor 120, may cause the electronic device 101 to combine a chat of another participant related to a recommended response with the recommended response and display the recommended response.

According to an embodiment, the instructions, when executed individually or collectively by the at least one processor 120, may cause the electronic device 101 to display recommended responses generated for a plurality of participants according to priority, and for the priority of the recommended response, a higher priority may be assigned to a chat as the chat displayed on the communication app is more recent and the urgency of a response request for the chat increases.

According to an embodiment, the instructions, when executed individually or collectively by the at least one processor 120, may cause the electronic device 101 to analyze a relationship among the plurality of participants joining the communication app and determine the tone of the recommended response based on the analyzed relationship among the plurality of participants.

According to an embodiment, the instructions, when executed individually or collectively by the at least one processor 120, may cause the electronic device 101 to select and analyze a chat corresponding to a specific topic or specific period from the chat of the plurality of participants joining the communication app.

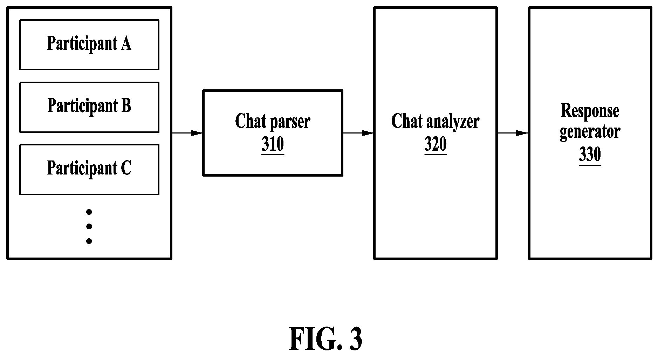

FIG. 3 is a diagram illustrating a method of providing a recommended response to each of participants by analyzing individual chats of the participants joining a group chat according to an embodiment. The operations illustrated in FIG. 3 may be performed by at least one component of an electronic device (e.g., the electronic device 101 of FIG. 1).

Referring to FIG. 3, a chat parser 310 may monitor a chat of participants joining a group chat and may parse the monitored chat. More specifically, the chat parser 310 may segment a chat of group chat participants, in other words, a message, into a semantic unit. The chat of group chat participants segmented into the semantic unit may be used for analyzing the chat.

A chat analyzer 320 may analyze the chat of group chat participants segmented into the semantic unit by the chat parser 310. More specifically, the chat analyzer 320 may classify the chat of group chat participants into an entire chat and a participant-wise individual chat. The chat analyzer 320 may generate input data of a response generator 330 for generating a recommended response for each of the participants, based on the classified entire chat and participant-wise individual chat. According to an embodiment, the chat analyzer 320 may generate input data of the response generator 330 using only an individual chat of participant A to generate a recommended response for participant A. Alternatively, according to an embodiment, the chat analyzer 320 may generate input data of the response generator 330 using not only the individual chat of participant B but also a portion of the entire chat to generate the recommended response for participant B. In this case, the portion of the entire chat used for generating the input data may correspond to the context of the entire data or summary information of the entire chat.

According to an embodiment, the chat analyzer 320 may analyze the chat of participants based on a current chat topic of the participants received on a chat window of the group chat. For example, when the current chat topic is identified as travel, the chat analyzer 320 may extract only a chat related to travel from the entire chat and may generate the extracted chat as input data of the response generator 330. As described above, the chat that is related to travel, is extracted by the chat analyzer 320, and is generated as the input data may receive a high weight when a recommended response is generated by the response generator 330 later.

In addition, the chat analyzer 320 may analyze the chat of participants based on the recent chat history received on the chat window of the group chat. For example, the chat analyzer 320 may extract only a chat during a period set by the user, such as the last 6 months or the last 1 year, from the entire chat of the participants and may generate the extracted chat as the input data of the response generator 330. As described above, the chat that is related to a specific period and is generated as the input data by being extracted by the chat analyzer 320 may receive a high weight when a recommended response is generated by the response generator 330.

The response generator 330 may generate a recommended response for each of the participants based on a result of analyzing the participant-wise individual chat analyzed by the chat analyzer 320. In this case, the response generator 330 may generate the recommended response for each of the participants using individual chat analysis results of the participants to which different weights are applied, based on the current chat topic or recent chat history of the participants. When the generated recommended response for each of the participants is displayed on the display, the response generator 330 may provide the recommended response by combining the recommended response with a character and/or an image indicating the participant such that the participant to which the recommended response displayed on the display is directed is distinguished.

Alternatively, the response generator 330 may generate a recommended response for all participants rather than recommended responses respectively for the participants, based on a result of analyzing the entire chat of the participants analyzed by the chat analyzer 320. Similarly, the response generator 330 may generate the recommended response for all participants using the entire chat analysis result of the participants to which different weights are applied, based on the current chat topic or recent chat history of the participants. In this case, when the generated recommended response for all participants is displayed on the display, the response generator 330 may display the recommended response for all participants displayed on the display to be distinguished from the recommended responses respectively for the participants.

In addition, some or all operations performed by the chat analyzer 320 and the response generator 330 among the components illustrated in FIG. 3 may also be performed by an external server. According to an embodiment, after transmitting a chat of group chat participants parsed by the chat parser 310 to an external server (e.g., a server of a chat service provider, an IP multimedia subsystem (IMS) server, or a rich communication service (RCS) server) via an application programming interface (API), the electronic device may generate the recommended response via the response generator 330 by receiving a chat analysis result performed by the external server. In this case, the chat analyzer 320 may be omitted from the components illustrated in FIG. 3. Alternatively, after transmitting the chat analysis result performed by the chat analyzer 320 to the external server via the API, the electronic device may receive a recommended response generation result performed by the external server and may display the recommended response generation result on the display. Similarly, in this case, the response generator 330 may be omitted from the components illustrated in FIG. 3.

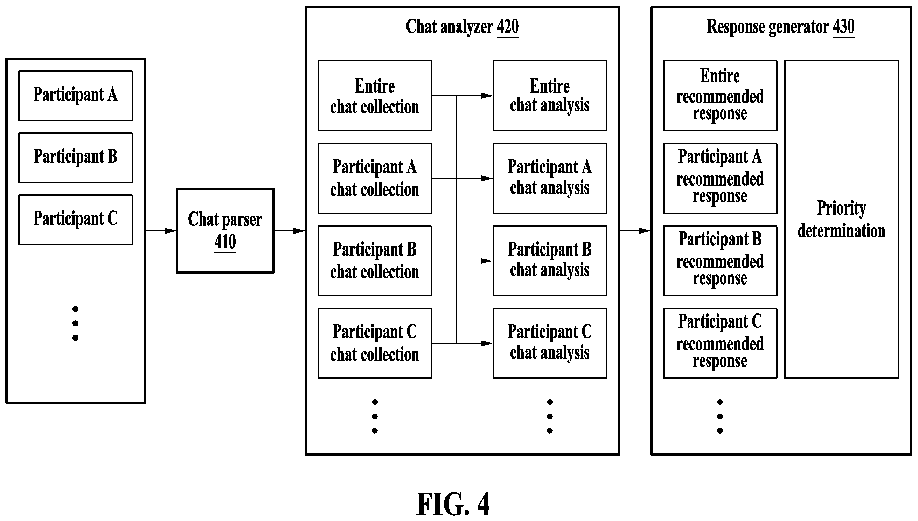

FIG. 4 is a diagram illustrating a method of providing a recommended response to each of participants using context of entire chat of the participants joining a group chat according to an embodiment. The operations illustrated in FIG. 4 may be performed by at least one component of an electronic device (e.g., the electronic device 101 of FIG. 1).

Referring to FIG. 4, a chat parser 410 may monitor a chat of participants joining a group chat and may parse the monitored chat. More specifically, the chat parser 410 may segment a chat of group chat participants, in other words, a message, into a semantic unit. The chat of group chat participants segmented into the semantic unit may be used for analyzing the chat.

A chat analyzer 420 may analyze the chat of group chat participants segmented into the semantic unit by the chat parser 410. More specifically, the chat analyzer 420 may classify the chat of group chat participants into an entire chat and a participant-wise individual chat. The chat analyzer 420 may generate input data of a response generator 430 for generating a recommended response for each of the participants, based on the classified entire chat and participant-wise individual chat. According to an embodiment, the chat analyzer 420 may generate input data of the response generator 430 using only an individual chat of participant A to generate a recommended response for participant A. Alternatively, according to an embodiment, the chat analyzer 420 may generate input data of the response generator 430 using not only the individual chat of participant B but also a portion of the entire chat to generate the recommended response for participant B. In this case, the portion of the entire chat used for generating the input data may correspond to the context of the entire data or summary information of the entire chat.

The response generator 430 may generate the recommended responses for the participants, respectively, based on the analysis result of the participant-wise individual chat and the entire chat of the group chat participants analyzed by the chat analyzer 420. According to an embodiment, the response generator 430 may provide a recommended response for participant A based on input data that is generated using only an individual chat of participant A. According to an embodiment, the response generator 430 may provide the recommended response for participant A based on the input data generated using not only the individual chat with participant A but also a portion of the entire chat. In this case, the response generator 430 may generate the recommended response for participant A such that the recommended response is not deviated from the context of the entire chat.

Meanwhile, the response generator 430 may determine a priority of a plurality of recommended responses. In this case, the response generator 430 may assign a high priority to a recommended response as a chat of a specific participant considered for generating the recommended response is more recent. For example, as a chat of the specific participant joining the group chat is more recent, in other words, is closer to a previous chat, the response generator 430 may apply a high weight to a recommended response generated based on the chat to determine the priority.

In addition, as user association of a chat of the specific participant considered for generating a recommended response increases, the response generator 430 may assign a higher priority to the recommended response. For example, when a phrase, such as a name or nickname, for specifying a user is identified in a chat of a specific participant joining the group chat, the response generator 430 may determine the priority by applying a high weight to a recommended response generated based on the chat of the specific participant. Alternatively, when a chat of a specific participant joining the group chat is analyzed as asking a question or making a request to a user, the response generator 430 may determine a priority by applying a high weight to a recommended response generated based on the chat of the specific participant.

In addition, as the urgency of a chat of a specific participant considered for generating a recommended response increases, the response generator 430 may assign a higher priority to the recommended response. For example, when a phrase indicating a warning or hazard (e.g., watch out or do not open the link) or a phrase indicating urgency (e.g., hurry or in a rush) is identified in a chat of a specific participant joining the group chat, the response generator 430 may determine the priority by applying a high weight to a recommended response generated based on the chat of the specific participant.

The response generator 430 may determine the priority for a plurality of recommended responses by individually using or combining the methods of determining the priority of the recommended response described above.

In addition, some or all operations performed by the chat analyzer 420 and the response generator 430 among the components illustrated in FIG. 4 may also be performed by an external server. According to an embodiment, after transmitting a chat of group chat participants parsed by the chat parser 410 to an external server via an API, the electronic device may generate a recommended response via the response generator 430 by receiving a chat analysis result performed by the external server. In this case, the chat analyzer 420 may be omitted from the components illustrated in FIG. 4. Alternatively, after transmitting the chat analysis result performed by the chat analyzer 420 to the external server via the API, the electronic device may receive a recommended response generation result performed by the external server and may display the recommended response generation result on the display. Similarly, in this case, the response generator 430 may be omitted from the components illustrated in FIG. 4.

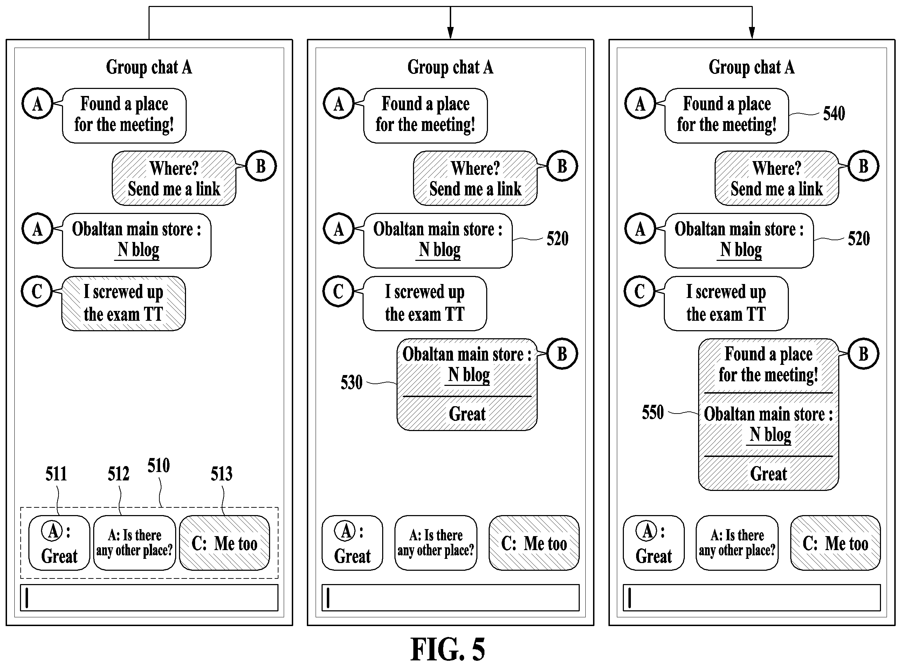

FIG. 5 is a diagram illustrating a method of displaying a recommended response on a chat window of a group chat according to an embodiment. The operations illustrated in FIG. 5 may be performed by at least one component of an electronic device (e.g., the electronic device 101 of FIG. 1).

According to an embodiment, when a communication app is activated and a chat window of a specific group chat is generated on an execution screen, the electronic device may generate a recommended response by analyzing an entire chat displayed on the chat window. When a user input to the chat window via a user interface is identified, the electronic device may display the generated recommended response in a region of the chat window. In this case, the recommended response displayed in the region of the chat window may include participant information for distinguishing a participant to distinguish which participant the recommended response is for.

More specifically, the electronic device may generate a recommended response including a color, an identifier (ID), a participant name, and/or an image (e.g., a profile picture) to distinguish a participant corresponding to the recommended response. For example, referring to FIG. 5, when a recommended response for participant A is generated, the electronic device may combine 511 the generated recommended response with a profile picture of participant A and may display them in a region 510 of a chat window. Alternatively, when a recommended response for participant A is generated, the electronic device may combine 512 the generated recommended response with the name or ID of participant A and may display them in the region 510 of the chat window. Alternatively, when background colors of speech bubbles of participants are different and a recommended response for participant C is generated, the electronic device may combine 513 the generated recommended response with the background color of speech bubble of participant C and may display them in the region 510 of the chat window. However, the method of distinguishing a participant is only an example, and the example is not limited thereto.

When one of the recommended responses displayed in the region 510 of the chat window is selected, the electronic device may identify a chat of a specific participant that is most relevant to the selected recommended response. When the chat of the specific participant that is most relevant to the selected recommended response is identified, the electronic device may bind and display the identified chat of the specific participant with the selected recommended response on the chat window. In this case, for the bound chat of the specific participant and the recommended response, the electronic device may display the chat of the specific participant first and then may display the recommended response below the displayed chat of the specific participant. Alternatively, the electronic device may display the bound recommended response first and then may display the chat of the specific participant below the displayed recommended response. However, the method of displaying the bound chat of the specific participant and the recommended response is an example, and the example is not limited thereto.

For example, referring to FIG. 5, when a recommended response 511 for participant A is selected from recommended responses displayed in the region 510 of the chat window, the electronic device may identify the chat of participant A that is most relevant to the selected recommended response 511. When a second chat 520 of participant A that is most relevant to the selected recommended response 511 is identified, the electronic device may display the identified second chat 520 of participant A first and may bind and display 530 the selected recommended response 511 below the displayed second chat 520 of participant A on the chat window. Alternatively, the electronic device may display the selected recommended response 511 first and may display the identified second chat 520 of participant A below the selected recommended response 511.

When chats 520 and 540 are identified as the chat of participant A most relevant to the selected recommended response 511, the electronic device may bind the identified chats 520 and 540 of participant A with the recommended response 511 and may display 550 them on the chat window. In this case, the electronic device may provide the result of binding the identified chat of the participant with the selected recommended response as a preview such that the user to respond while being aware of the chat to which the recommended response corresponds.

On the other hand, when a chat of the specific participant that is most relevant to the selected recommended response is not identified, the electronic device may display only the selected recommended response on the chat window. In addition, when a chat of another participant is updated on the chat window of the group chat, the electronic device may generate a new recommended response based on the updated chat, and when an irrelevant recommended response is generated based on the existing chat history, the electronic device may update and display the recommended response.

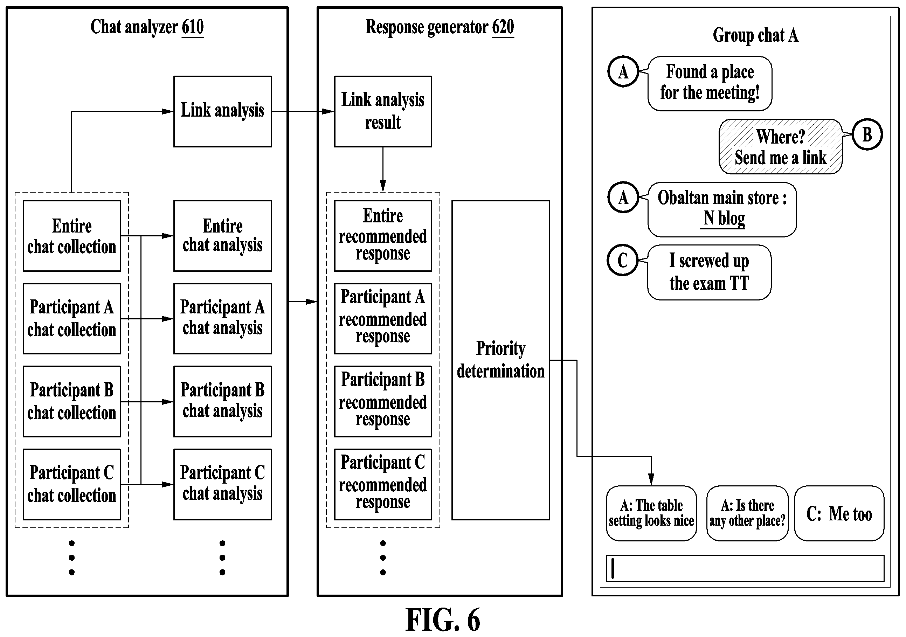

FIG. 6 is a diagram illustrating a method of displaying a recommended response generated based on a specific link on a chat window of a group chat according to an embodiment. The operations illustrated in FIG. 6 may be performed by at least one component of an electronic device (e.g., the electronic device 101 of FIG. 1).

Referring to FIG. 6, when a communication app is activated and a chat window of a specific group chat is generated on an execution screen, with respect to a specific link (e.g., a URL) of the chat window, a chat analyzer 610 may identify whether a user views the specific link. When the user is identified to have viewed the specific link, the chat analyzer 610 may analyze content of the specific link viewed by the user. For example, when the user clicks the specific link and a web page or content is loaded, the chat analyzer 610 may analyze the loaded web page or content.

A response generator 620 may provide a recommended response using an analysis result of the specific link analyzed by the chat analyzer 610. For example, the response generator 620 may generate the recommended response for the specific link by additionally reflecting the analysis result of the web page or content regarding the specific link in an analysis result of a chat of participants joining the group chat. For example, as illustrated in FIG. 6, when a specific link regarding a restaurant is input by participant A and a user clicks the specific link, the chat analyzer 610 may analyze a web page related to the restaurant loaded via the specific link. The response generator 620 may generate a recommended response for the specific link, such as "A: The table setting looks nice", by additionally reflecting an analysis result of a web page related to the restaurant in the analysis result of the chat of participants joining the group chat.

In FIG. 6, although the method of displaying a recommended response generated based on a specific link on a chat window of a group chat is described, the method of displaying is only an example. The example is not limited thereto, and the method may be performed on a chat window of a one-to-one chat in substantially the same manner.

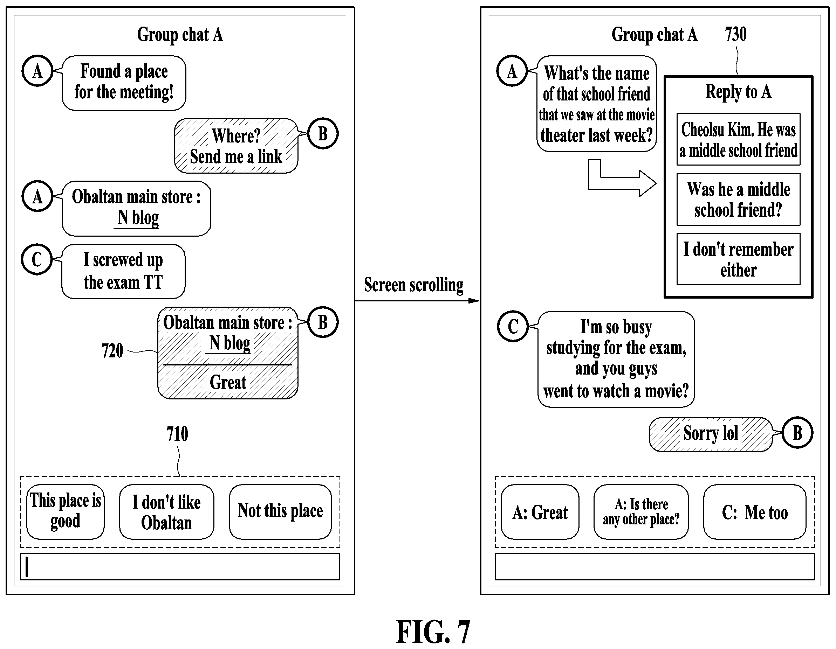

FIG. 7 is a diagram illustrating a method of displaying a recommended response for a specific chat selected by a user on a chat window of a group chat according to an embodiment. The operations illustrated in FIG. 7 may be performed by at least one component of an electronic device (e.g., the electronic device 101 of FIG. 1).

Referring to FIG. 7, when a communication app is activated and a chat window of a specific group chat is generated on an execution screen, the electronic device may identify a specific chat selected by a user from the entire chat displayed on the chat window. When the specific chat selected by the user is identified, the electronic device may generate a recommended response, based on the selected specific chat and the context of the entire chat of participants joining a group chat, and may display the generated recommended response in a region 710 of the chat window. When one of recommended responses displayed in the region 710 of the chat window is selected, the electronic device may bind the selected recommended response (e.g., a second speech bubble of participant A) with a specific chat that forms the basis of the selected recommended response and may display 720 it on the chat window.

In addition, when a reply function (e.g., long press) regarding a specific chat that is previously displayed is performed by performing screen scrolling on the entire chat displayed on the chat window, the electronic device may provide a window object 730 in a pop-up format that may provide a recommended response for the specific chat in an adjacent region of the specific chat (e.g., a first speech bubble of participant A) on which the reply function is performed. However, the method of providing a recommended response of a specific chat on which the reply function is performed is an example, and the example is not limited thereto.

In FIG. 7, although the method of displaying a recommended response for a specific chat selected by a user on a chat window of a group chat is described, the method of displaying is only an example, and the example is not limited thereto. The method may be performed on a chat window of a one-to-one chat in substantially the same manner.

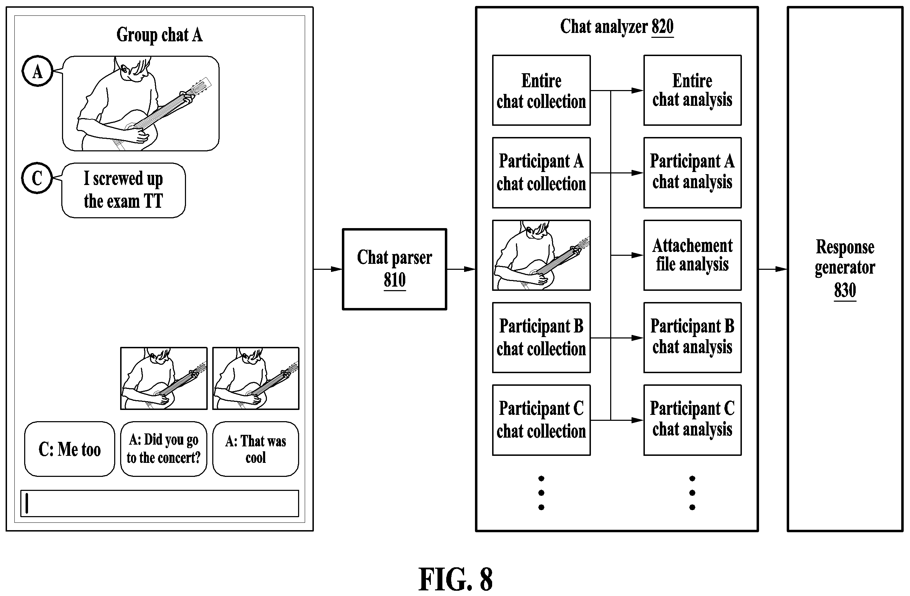

FIG. 8 is a diagram illustrating a method of displaying a recommended response generated based on attached content on a chat window of a group chat according to an embodiment. The operations illustrated in FIG. 8 may be performed by at least one component of an electronic device (e.g., the electronic device 101 of FIG. 1).

Referring to FIG. 8, a chat parser 810 may monitor a chat of participants joining a group chat and may parse the monitored chat. In this case, when content is shared by another participant via a communication app, the chat parser 810 may parse the shared content.

When the shared content is an image or a video, a chat analyzer 820 may analyze the parsed image or video, and the response generator 830 may generate a recommended response for the image or video by additionally reflecting a result of analyzing the parsed image or video in a result of analyzing a chat of participants joining a group chat. In this case, the response generator 830 may provide a recommended response for the image or video using only the analysis result of the parsed image or video. For example, when the shared content is an image and the image is determined to be an image related to a concert as a result of analyzing the parsed image, the response generator 830 may generate a recommended response for the image, such as "A: Did you go to the concert?".

Alternatively, when the parsed image or video is identified as an image or video related to the user by analyzing association between the user and the parsed image or video, the response generator 830 may provide a recommended response that does not deviate from the context of the entire chat by additionally reflecting the analysis result of the parsed image or video in the analysis result of the chat of participants joining the group chat. For example, as a result of analyzing, when the parsed image is determined to be an image related to a concert of a specific singer and a user is identified to have attended the concert of the specific singer based on previous chat history of the user, the response generator 830 may generate a recommended response that is more personalized to the user while maintaining the context of the entire chat, such as "A: That was cool".

In addition, the response generator 830 may bind content shared by another participant with a recommended response generated based on the shared content and may display it in a region of the chat window, thereby allowing the user to distinguish which content the recommended response is for.

In FIG. 8, although the method of displaying a recommended response generated based on attached content on a chat window of a group chat is described, the method of displaying is only an example. The example is not limited thereto, and the method may be performed on a chat window of a one-to-one chat in substantially the same manner.

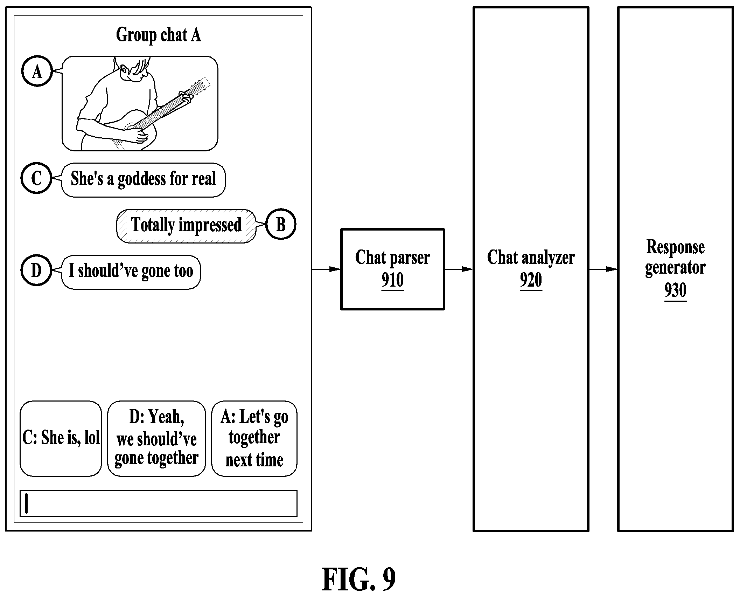

FIG. 9 is a diagram illustrating a method of displaying a recommended response that is changed as a chat of other participants is added, on a chat window of a group chat according to an embodiment. The operations illustrated in FIG. 9 may be performed by at least one component of an electronic device (e.g., the electronic device 101 of FIG. 1).

Referring to FIG. 9, a chat parser 910 may monitor a chat of participants joining a group chat and may parse the monitored chat. In this case, when content is shared by a specific participant via a communication app, the chat parser 910 may parse the shared content.

A chat analyzer 920 may analyze the parsed content, and a response generator 930 may generate a recommended response for the shared content by additionally reflecting an analysis result of the parsed content in an analysis result of the chat of participants joining the group chat.

In this case, when chats of other participants are added to the content shared by the specific participant, the chat analyzer 920 may analyze the added chats of other participants, and the response generator 930 may update the recommended response based on the analyzed additional chats of other participants. In this case, the response generator 930 may update the recommended response for the shared content by excluding an additional chat that is irrelevant to the shared content and considering only an additional chat that is relevant to the shared content among the added chats of other participants.

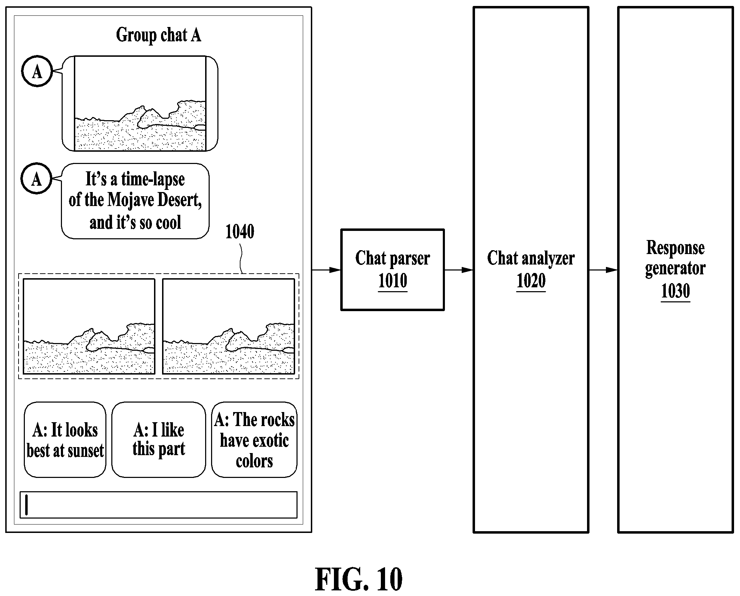

FIG. 10 is a diagram illustrating a method of generating a recommended response when video content is attached according to an embodiment. The operations illustrated in FIG. 10 may be performed by at least one component of an electronic device (e.g., the electronic device 101 of FIG. 1).

Referring to FIG. 10, a chat parser 1010 may monitor a chat of participants joining a group chat and may parse the monitored chat. In this case, when video content is shared by another participant via a communication app, the chat parser 1010 may parse the shared video content.

A chat analyzer 1020 may analyze content regarding all frames of the shared video content using the parsed video content, and a response generator 1030 may provide a recommended response for the shared content by additionally reflecting an analysis result of the parsed video content in an analysis result of the chat of participants joining the group chat. In this case, when the video content is shared via the communication app, the electronic device may provide a preview interface 1040 for the video content near an input window. In this case, the preview interface 1040 may provide a timeline of the video content such that the user may view a frame of a desired time window. When the user selects a timeline at a specific time point, the response generator 1030 may generate a recommended response using an analysis result from a first frame to a frame regarding the selected time line at the specific time point. Alternatively, the response generator 1030 may generate the recommended response using a frame analysis result of the time line at the specific time point selected by the user.

In FIG. 10, although the method of generating and displaying a recommended response when video content is attached is described, the method of displaying is only an example. The example is not limited thereto, and the method may be performed on a chat window of a one-to-one chat in substantially the same manner.

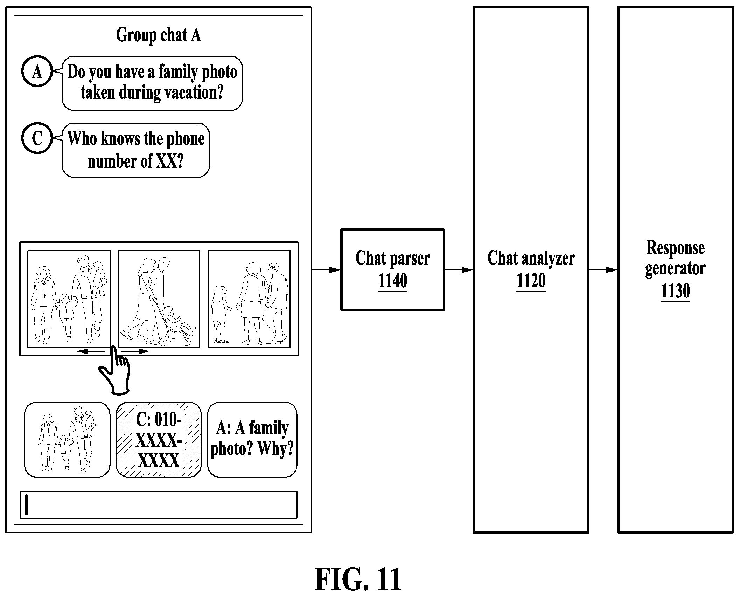

FIG. 11 is a diagram illustrating a method of generating a recommended response based on a request for a user according to an embodiment. The operations illustrated in FIG. 11 may be performed by at least one component of an electronic device (e.g., the electronic device 101 of FIG. 1).

Referring to FIG. 11, a chat parser 1110 may monitor a chat of participants joining a group chat and may parse the monitored chat. More specifically, the chat parser 1110 may segment the chat of group chat participants in a semantic unit. The chat of group chat participants segmented into the semantic unit may be used for analyzing the chat.

A chat analyzer 1120 may determine whether there is a request for the user by analyzing the chat of the group chat participants segmented into the semantic unit by the chat parser 1110. For example, for a chat in which an interrogative ending or an interrogative punctuation mark (e.g., a question mark (?)) is identified in the chat of the participants joining the group chat, the chat analyzer 1120 may determine that there is a request for the user. However, the method of determining whether there is a request for a user is only an example, and the example is not limited thereto.

When the request for the user is identified as a result of analyzing the chat of group chat participants by the chat analyzer 1120, a response generator 1130 may generate a recommended response for the identified request. For example, when a request for a photo with a specific condition, such as "Do you have a family photo taken during vacation?", from another participant is identified, the response generator 1130 may search for a photo related to the specific condition using a search function of an electronic device of the user. The response generator 1130 may provide a photo that is determined by performing filtering on a search result of the photo related to the specific condition, as the recommended response. Alternatively, the response generator 1130 may provide a window object in a pop-up format such that the user directly selects the search result of the photo related to the specific condition. This may allow the user to avoid leaving the communication app to select specific content from the gallery. In this case, the user may select at least one photo included in the window object using a swipe function, and the response generator 1130 may provide the photo selected by the user as the recommended response.

In addition, when a request for specific information, such as "Who knows the phone number of XX?", from another participant, the response generator 1130 may search for the specific information using the search function of the electronic device of the user. Similarly, the response generator 1130 may provide information that is determined by performing filtering on a search result of the specific information, as the recommended response. Alternatively, the response generator 1130 may provide a window object in a pop-up format such that the user directly selects the search result of the specific information. In this case, the user may select at least one piece of the specific information included in the window object using the swipe function, and the response generator 1130 may provide the specific information selected by the user as the recommended response.

In FIG. 11, although the method of generating and displaying a recommended response based on a request for a user is described, the method of displaying is only an example. The example is not limited thereto, and the method may be performed on a chat window of a one-to-one chat in substantially the same manner.

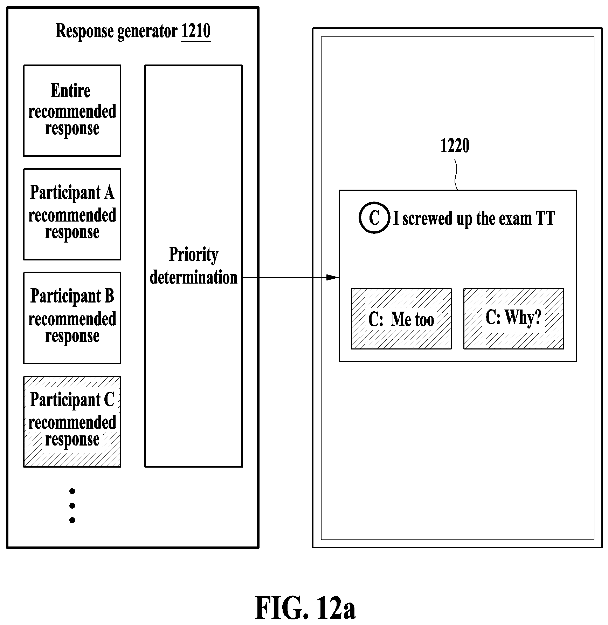

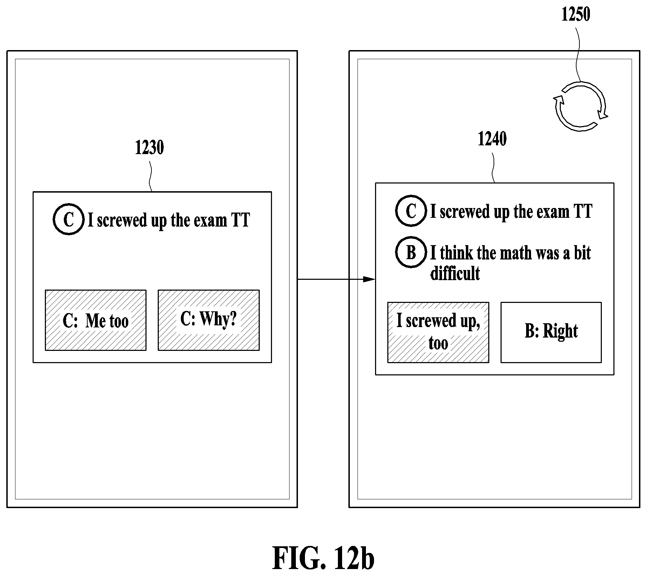

FIGS. 12A and 12B are diagrams illustrating a method of generating a recommended response in a notification pop-up state of a communication application (app) according to an embodiment. The operations illustrated in FIGS. 12A and 12B may be performed by at least one component of an electronic device (e.g., the electronic device 101 of FIG. 1).

Referring to FIG. 12A, when a message is received while a user does not enter a communication app according to settings of the communication app, the electronic device may provide the received message in a pop-up window format. In this case, when the received message is from another participant joining a group chat, a response generator 1210 may filter and provide only a recommended response for the participant who transmits the message. For example, when participants A, B, and C join the group chat and a message is provided in a pop-up window format as the message is transmitted from participant C, the response generator 1210 may filter and provide 1220 only a recommended response for participant C.

Referring to FIG. 12B, in a situation 1230 where a user responds using a pop-up window, when a chat of another participant is added, the electronic device may update 1240 the added chat of the other participant to the pop-up window. Alternatively, when a user interaction, such as clicking a refresh button is identified 1250 before the pop-up window is closed, the electronic device may update 1240 the pop-up window. In this case, the response generator 1210 may update the recommended response by additionally considering the chat of the other participant added to the pop-up window.

In addition, when a response is performed using the pop-up window, chats of other participants before the response may not be viewed. Accordingly, when a response is performed using the pop-up window, the communication app may determine that the user views only the chats of other participants corresponding to the response and may process message acknowledgment synchronization (e.g., a function of removing "1") in a chat window as an exception.

In FIGS. 12A and 12B, although the method of generating and displaying a recommended response in a notification pop-up state of a communication app is described, the method of displaying is only an example. The example is not limited thereto, and the method may be performed on a chat window of a one-to-one chat in substantially the same manner.

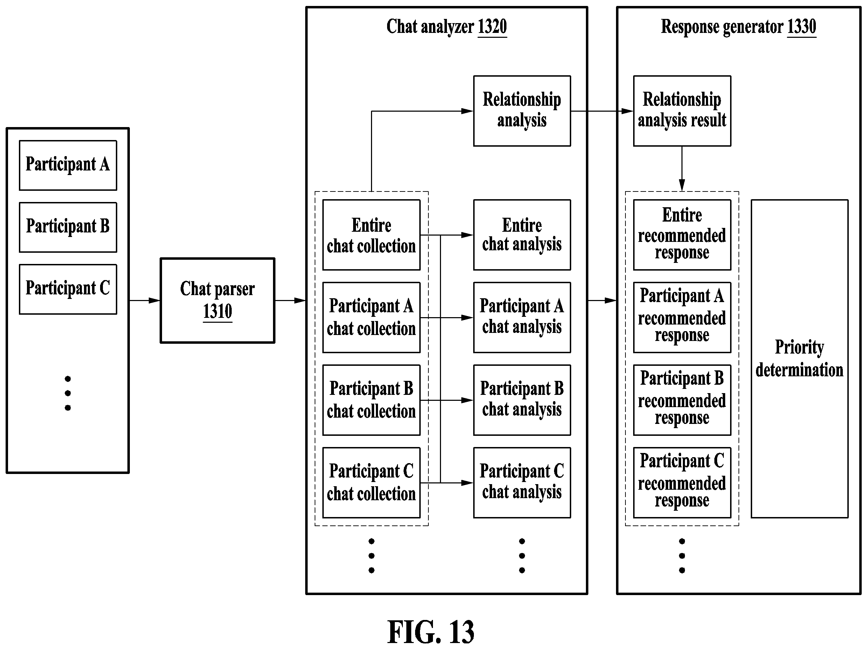

FIG. 13 is a diagram illustrating a method of generating a recommended response based on a relationship among participants joining a group chat according to an embodiment. The operations illustrated in FIG. 13 may be performed by at least one component of an electronic device (e.g., the electronic device 101 of FIG. 1).

Referring to FIG. 13, a chat parser 1310 may monitor a chat of participants joining a group chat and may parse the monitored chat. More specifically, the chat parser 1310 may segment the chat of group chat participants in a semantic unit.

A chat analyzer 1320 may analyze the chat of group chat participants segmented into the semantic unit by the chat parser 1310. More specifically, the chat parser 1320 may classify and analyze the chat of group chat participants into an entire chat and a participant-wise individual chat. The chat analyzer 1320 may generate input data of a response generator 1330 for generating a recommended response for each of the participants, based on the classified entire chat and participant-wise individual chat. According to an embodiment, the chat analyzer 1320 may generate input data of the response generator 1330 using only an individual chat of participant A to generate a recommended response for participant A. Alternatively, according to an embodiment, the chat analyzer 1320 may generate input data of the response generator 1330 using not only the individual chat of participant B but also a portion of the entire chat to generate the recommended response for participant B. In this case, the portion of the entire chat used for generating the input data may correspond to the context of the entire data or summary information of the entire chat.

The response generator 1330 may generate a recommended response for each of the participants based on an analysis result of the chat of participants joining the group chat. In this case, the response generator 1330 may additionally analyze a relationship between participants joining the group chat and may determine the tone of a sentence forming the recommended response according to the analysis result. For example, as a result of analyzing the relationship between participant A and participant B joining the group chat, when the relationship is determined to have a high degree of intimacy, such as between peers or family members, the response generator 1330 may generate a sentence forming the recommended response in plain language. On the other hand, as a result of analyzing the relationship between participant A and participant B joining the group chat, when the relationship is determined to be a formal relationship, such as between colleagues or a subordinate and a superior, the response generator 1330 may generate a sentence forming the recommended response in polite language. However, the method of determining the tone of a sentence forming a recommended response based on the relationship between participants joining a group chat is only an example and is not limited thereto.

In this case, the response generator 1330 may analyze a relationship between a user and other participants joining a group chat and a relationship among other participants using a chat included in the group chat or chat history among the participants.

In addition, as illustrated in FIG. 13, a new participant, such as participant C, other than existing participants, such as participant A and participant B, may join the group chat, and in this case, the response generator 1330 may redefine relationship information defined in the group chat by analyzing an additional chat due to the new participant. When the relationship information in the group chat is redefined, the response generator 1330 may change the tone of the sentence forming the recommended response based on the redefined relationship information.

In addition, some or all operations performed by the chat analyzer 1320 and the response generator 1330 among the components illustrated in FIG. 13 may also be performed by an external server. According to an embodiment, after transmitting a chat of group chat participants parsed by the chat parser 1310 to an external server via an API, the electronic device may generate a recommended response via the response generator 1330 by receiving a chat analysis result performed by the external server. In this case, the chat analyzer 1320 may be omitted from the components illustrated in FIG. 13. Alternatively, after transmitting the chat analysis result performed by the chat analyzer 1320 to the external server via the API, the electronic device may receive a recommended response generation result performed by the external server and may display the recommended response generation result on the display. In this case, the recommended response generated by the external server may be a result in which the tone of the sentence is determined based on the relationship between the participants joining the group chat. Similarly, in this case, the response generator 1330 may be omitted from the components illustrated in FIG. 13.

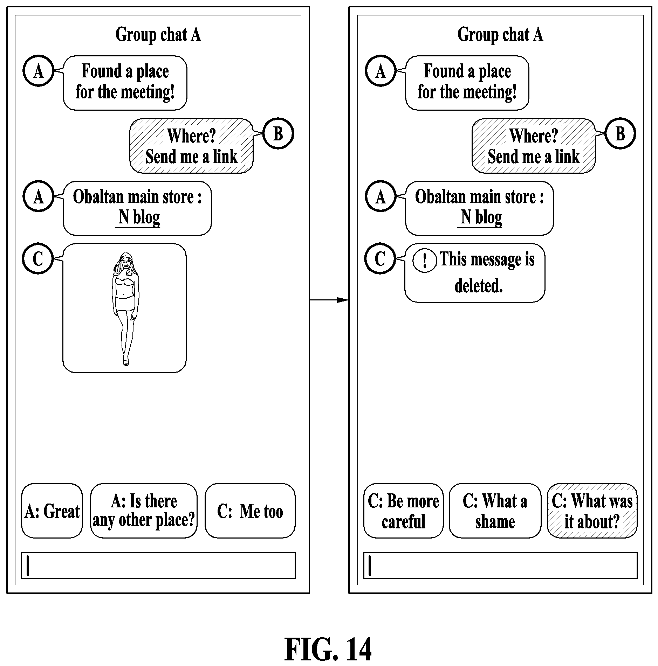

FIG. 14 is a diagram illustrating a method of generating a recommended response when an original message is deleted from a chat of participants joining a group chat according to an embodiment. The operations illustrated in FIG. 14 may be performed by at least one component of an electronic device (e.g., the electronic device 101 of FIG. 1).

Referring to FIG. 14, when an original message is deleted from a chat of participants joining a group chat, the electronic device may generate an additional recommended response, based on content of the deleted original message or the act of deletion. For example, when participant C joining the group chat accidentally uploads an explicit image of themselves and immediately deletes the image, the electronic device may additionally generate a recommended response related to the content of the deleted original message, such as "Be more careful" or "What a shame". Alternatively, the electronic device may also additionally generate a recommended response related to the act of deletion of the original message, such as "What was it about?".

In addition, when a specific participant deletes their original message while a recommended response is provided to the user based on the chat of participants joining the group chat, the electronic device may change and display a user interface (UI) of the recommended response corresponding to the deleted original message. For example, the electronic device may process the recommended response corresponding to the deleted original message to be transparent or dark. However, the method of processing a recommended response corresponding to a deleted original image is only an example and is not limited thereto.

In FIG. 14, although the method of generating and displaying a recommended response when an original message is deleted is described, the method of displaying is only an example. The example is not limited thereto, and the method may be performed on a chat window of a one-to-one chat in substantially the same manner.

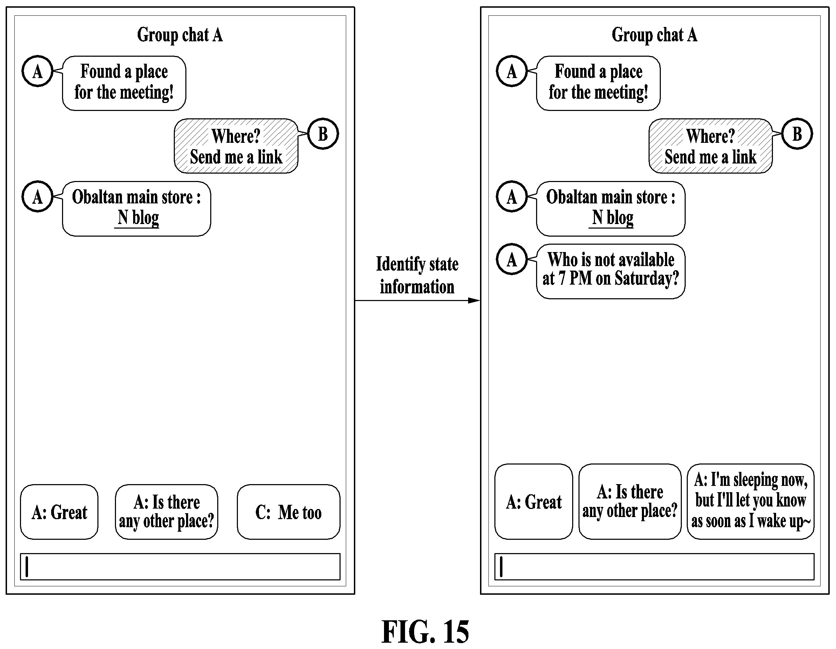

FIG. 15 is a diagram illustrating a method of generating a recommended response based on state information of a user according to an embodiment. The operations illustrated in FIG. 15 may be performed by at least one component of an electronic device (e.g., the electronic device 101 of FIG. 1).

Referring to FIG. 15, the electronic device may identify state information of a user based on a sensor at the time when messages of other participants are received and may generate a recommended response based on the identified state information. For example, when a message "Who is not available at 7 PM on Saturday?" is received from participant A joining a group chat, the electronic device may identify the state information of the user at the time of receiving the message, such as whether the user is sleeping, exercising, or playing a game. When the user is determined to be sleeping based on the identified state information, the electronic device may generate and provide a recommended response reflecting the state information of the user, such as "I'm sleeping now, but I'll let you know as soon as I wake up~".

In FIG. 15, although the method of generating a recommended response based on state information of a user and then displaying the recommended response on a chat window of a group chat is described, the method of displaying is only an example. The example is not limited thereto, and the method may be performed on a chat window of a one-to-one chat in substantially the same manner.

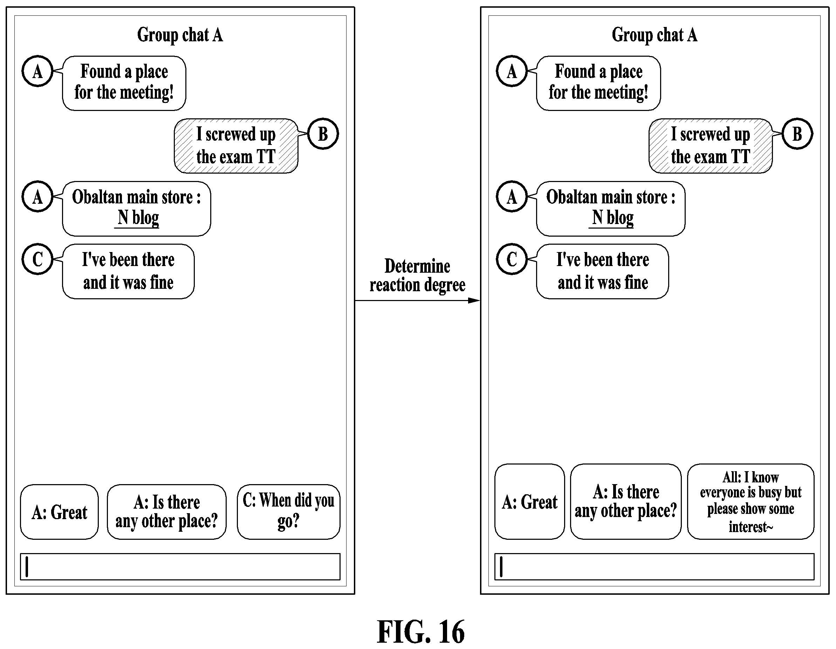

FIG. 16 is a diagram illustrating a method of generating a recommended response based on a degree of reaction of another participant to a message of a user according to an embodiment. The operations illustrated in FIG. 16 may be performed by at least one component of an electronic device (e.g., the electronic device 101 of FIG. 1).

Referring to FIG. 16, the electronic device may identify a reaction count or a replay count of other participants regarding a message input by a user, and when the identified reaction count or reply count exceeds or is less than a preset threshold, the electronic device may generate a recommended response based on a reaction degree. For example, when the user inputs a message "I screwed up the exam TT" to a group chat, the electronic device may identify a reaction degree according to a reaction count or a reply count of other participants to the message. When the identified reaction degree is less than the preset threshold, the electronic device may generate and provide a recommended response reflecting the reaction degree of other participants, such as "I know everyone is busy but please show some interest~".

In FIG. 16, although the method of generating a recommended response based on a reaction degree of other participants to a message of a user and then displaying the recommended response on a chat window of a group chat is described, the method of displaying is only an example. The example is not limited thereto, and the method may be performed on a chat window of a one-to-one chat in substantially the same manner.

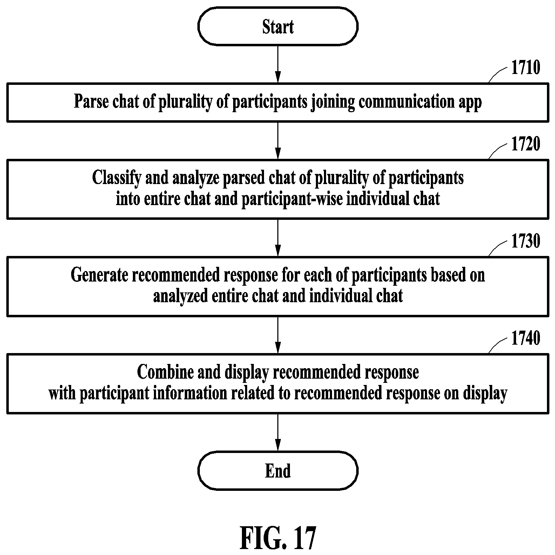

FIG. 17 is a diagram illustrating a method of generating a recommended response by an electronic device according to an embodiment. In an embodiment, at least one of the operations of FIG. 17 may be performed simultaneously or in parallel with another operation, and the order of the operations may be changed. In addition, at least one of the operations may be omitted, and other operations may be additionally performed. The operations illustrated in FIG. 17 may be performed by at least one component of an electronic device (e.g., the electronic device 101 of FIG. 1).

According to an embodiment, in operation 1710, the electronic device may parse a chat of participants joining a communication app. In operation 1720, the electronic device may classify the parsed chat of participants into an entire chat and a participant-wise individual chat and may analyze them. In operation 1730, the electronic device may generate a recommended response for each of the participants, based on the analyzed entire chat and individual chat. In operation 1740, the electronic device may combine participant information related to the recommended response with the recommended response and may display the combined recommended response on a display.

According to an embodiment, when URL information is received from another participant via the communication app, the operation of generating the recommended response may analyze a webpage or content corresponding to the URL information. The operation of generating the recommended response may generate a recommended response corresponding to the URL information, based on a result of analyzing the webpage or content corresponding to the URL information, a result of analyzing the entire chat, and a result of analyzing an individual chat of the participant providing the URL information.

According to an embodiment, when content corresponding to an image or a video is received from another participant via the communication app, the operation of generating the recommended response may analyze the content. The operation of generating the recommended response may generate a recommended response corresponding to the content, based on a result of analyzing the content, a result of analyzing the entire chat, and a result of analyzing an individual chat of the participant providing the content.

According to an embodiment, when a specific chat is selected from chats of the participants, the operation of generating the recommended response may generate a recommended response corresponding to the selected specific chat, based on a result of analyzing the selected specific chat and a result of analyzing the entire chat.

According to an embodiment, the operation of generating the recommended response may identify a response request chat requesting a response from a user, based on the analyzed entire chat and individual chat. The operation of generating the recommended response may search for specific information regarding the response request chat using a search function of the electronic device. The operation of generating the recommended response may generate a search result for the specific information found using the search function as a recommended response corresponding to the response request chat.

According to an embodiment, the operation of displaying on the display may combine the recommended response with the chat of another participant related to the recommended response and may display the combined recommended response on the display.

According to an embodiment, the operation of displaying on the display may display recommended responses respectively generated for the participants according to priority. For the priority of recommended responses, a higher priority may be assigned to a chat as a chat displayed on the communication app is more recent and the urgency of a reply request for the chat increases.

According to an embodiment, the electronic device may analyze a relationship between the participants joining the communication app. The operation of generating the recommended response may determine the tone of the recommended response based on the analyzed relationship between the participants.

The electronic device according to various embodiments described herein may be one of various types of electronic devices. The electronic device may include, for example, a portable communication device (e.g., a smartphone), a computer device, a portable multimedia device, a portable medical device, a camera, a wearable device, or a home appliance. The electronic device according to the embodiment of the present disclosure is not limited to the devices described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "first," "second," "first," or "second" may be used simply to distinguish one component from another and may not limit the components with respect to other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), it means that the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the electronic device 101 of FIG. 1). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. A machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments of the present disclosure disclosed in the specification and the drawings are merely presented to easily describe technical contents of various embodiments of the present disclosure and help the understanding of them and are not intended to limit the various embodiments. Therefore, all changes or modifications derived from the technical idea of the various embodiments of the present disclosure as well as the various embodiments disclosed herein should be construed to fall within the various embodiments.

## Claims

1. An electronic device (101) comprising:
at least one processor (120) comprising processing circuitry; and
a memory (130) comprising one or more storage media storing instructions,
wherein the instructions, when individually or collectively executed by the at least one processor (120), cause the electronic device (101) to:
parse a chat of a plurality of participants joining a communication application (app),
classify and analyze the parsed chat of the plurality of participants into an entire chat and a participant-wise individual chat,
generate a recommended response for each of the participants, based on the analyzed entire chat and the analyzed individual chat, and
combine the recommended response with participant information related to the recommended response and display the combined recommended response on a display.

2. The electronic device (101) of claim 1,
wherein the instructions, when individually or collectively executed by the at least one processor (120), further cause the electronic device (101) to:
when uniform resource locator (URL) information is received from another participant via the communication app, analyze a webpage or content corresponding to the URL information, and
generate a recommended response corresponding to the URL information, based on a result of analyzing the webpage or content corresponding to the URL information, a result of analyzing the entire chat, and a result of analyzing an individual chat of the participant providing the URL information.

3. The electronic device (101) of one of claims 1 and 2,
wherein the instructions, when individually or collectively executed by the at least one processor (120), further cause the electronic device (101) to:
when content corresponding to an image or a video is received from another participant via the communication app, analyze the content, and generate a recommended response corresponding to the content, based on a result of analyzing the content, the result of analyzing the entire chat, and a result of analyzing an individual chat of the participant providing the content.

4. The electronic device (101) of one of claims 1 to 3,
wherein the instructions, when individually or collectively executed by the at least one processor (120), further cause the electronic device (101) to:
generate a recommended response regarding the content, based on the result of analyzing the content.

5. The electronic device (101) of one of claims 1 to 4,
wherein the instructions, when individually or collectively executed by the at least one processor (120), further cause the electronic device (101) to:
analyze an association between the content and a user based on the result of analyzing the content, and
when the analyzed association is greater than or equal to a preset threshold, generate information related to the user as a recommended response.

6. The electronic device (101) of one of claims 1 to 5,
wherein the instructions, when individually or collectively executed by the at least one processor (120), further cause the electronic device (101) to:
when a specific chat is selected from the chat of the plurality of participants, generate a recommended response corresponding to the selected specific chat, based on a result of analyzing the selected specific chat and the result of analyzing the entire chat.

7. The electronic device (101) of one of claims 1 to 6,
wherein the instructions, when individually or collectively executed by the at least one processor (120), further cause the electronic device (101) to:
identify a response request chat requesting a response from the user, based on the analyzed entire chat and the analyzed individual chat,
search for specific information related to the response request chat using a search function of the electronic device, and
generate a search result for the specific information found using the search function as a recommended response corresponding to the response request chat.

8. The electronic device (101) of one of claims 1 to 7,
wherein the instructions, when individually or collectively executed by the at least one processor (120), further cause the electronic device (101) to:
combine the recommended response with a chat of another participant related to the recommended response and display the combined recommended response on the display.

9. The electronic device (101) of one of claims 1 to 8,
wherein the instructions, when individually or collectively executed by the at least one processor (120), further cause the electronic device (101) to:
display recommended responses respectively generated for the plurality of participants according to priority, and
for the priority of recommended responses, as a chat displayed on the communication app is more recent and urgency of a reply request for the chat increases, a higher priority is assigned to the chat.

10. The electronic device (101) of one of claims 1 to 9,
wherein the instructions, when individually or collectively executed by the at least one processor (120), further cause the electronic device (101) to:
analyze a relationship between the plurality of participants joining the communication app, and
determine a tone of the recommended response based on the analyzed relationship between the plurality of participants.

11. The electronic device (101) of one of claims 1 to 10,
wherein the instructions, when individually or collectively executed by the at least one processor (120), further cause the electronic device (101) to:
select and analyze a chat corresponding to a specific topic or a specific period from the chat of the plurality of participants joining the communication app.

12. An operating method of an electronic device (101), the operating method comprising:
parsing a chat of a plurality of participants joining a communication application (app);
classifying and analyzing the parsed chat of the plurality of participants into an entire chat and a participant-wise individual chat;
generating a recommended response for each of the participants, based on the analyzed entire chat and the analyzed individual chat; and
combining the recommended response with participant information related to the recommended response and displaying the combined recommended response on a display.

13. The operating method of claim 12,
wherein the generating of the recommended response comprises:
when uniform resource locator (URL) information is received from another participant via the communication app, analyzing a webpage or content corresponding to the URL information; and
generating a recommended response corresponding to the URL information, based on a result of analyzing the webpage or content corresponding to the URL information, a result of analyzing the entire chat, and a result of analyzing an individual chat of the participant providing the URL information.

14. The operating method of one of claims 12 and 13,
wherein the generating of the recommended response comprises:
when content corresponding to an image or a video is received from another participant via the communication app, analyzing the content; and
generating a recommended response corresponding to the content, based on a result of analyzing the content, a result of analyzing the entire chat, and a result of analyzing an individual chat of the participant providing the content.

15. The operating method of one of claims 12 to 14,
wherein the generating of the recommended response comprises:
when a specific chat is selected from the chat of the plurality of participants, generating a recommended response corresponding to the selected specific chat, based on a result of analyzing the selected specific chat and the result of analyzing the entire chat.
